# EUROPEAN PATENT APPLICATION

(11) **EP 1 379 043 A1**
(43) Date of publication of application: **07.01.2004**
(21) Application number: 03705215.6
(22) Date of filing: 17.02.2003
(51) Int. Cl.: H04L 27/34

(54) **TRANSMISSION APPARATUS AND TRANSMISSION METHOD**

(30) Priority: 15.02.2002 JP 2002039358
(71) Applicant: MATSUSHITA ELECTRIC INDUSTRIAL CO., LTD., Kadoma-shi, Osaka 571-8501 (JP)
(72) Inventor: UEHARA, Toshiyuki, Yokosuka-shi, Kanagawa 239-0842 (JP); SUZUKI, Hidetoshi, Yokosuka-shi, Kanagawa 239-0847 (JP); KASAPIDIS, Makis, Yokohama-shi, Kanagawa 236-0012 (JP); MIYOSHI, Kenichi, Yokohama-shi, Kanagawa 236-0058 (JP)
(74) Representative: Grünecker, Kinkeldey, Stockmair & Schwanhäusser Anwaltssozietät
(86) International application number: PCT/JP2003/001620
(87) International publication number: WO 2003/069868

(57) **Abstract**

A randmization section 101 makes the number of 1s and number of 0s of data the same. A coding section 102 performs coding processing on data in which the number of 1s and number of 0s have become the same. An HS-DSCH modulation and spreading section 103 performs M-ary modulation of the coded data, followed by spreading processing using a spreading code. Meanwhile, a common known signal undergoes M-ary modulation, followed by spreading processing using a spreading code, by a CPICH modulation and spreading section 104. The common known signal that has undergone spreading processing by CPICH modulation and spreading section 104 and data that has undergone spreading processing by HS-DSCH modulation and spreading section 103 are multiplexed by a multiplexing section 105. A multiplexed transmit signal is transmitted from a radio transmitting section 106. By this means, I-Q plane reference points can be found with a high degree of accuracy by means of a simple circuit configuration.

## Description

### Technical Field

The present invention relates to a transmitting apparatus and transmission method for transmitting M-ary modulated data.

### Background Art

Recently, amplitude modulation that provides information in amplitude, such as M-ary QAM (Quadrature Amplitude Modulation), has been implemented as a modulation method for digital radio communication that responds to growing communication needs. With 16QAM, for example, 4 bits of information can be transmitted per symbol.

Conventionally, a radio apparatus that performs such 16QAM communication obtains the average power from received data and finds reference points of 16 values in the I-Q plane from the obtained average power. Then, based on the reference points found in this way, a soft decision value is calculated from each symbol of the received data, and the received data is decoded. The average power can be calculated by squaring the amplitude for each symbol, then adding the values of all the symbols, and dividing the value obtained by this addition by the number of symbols.

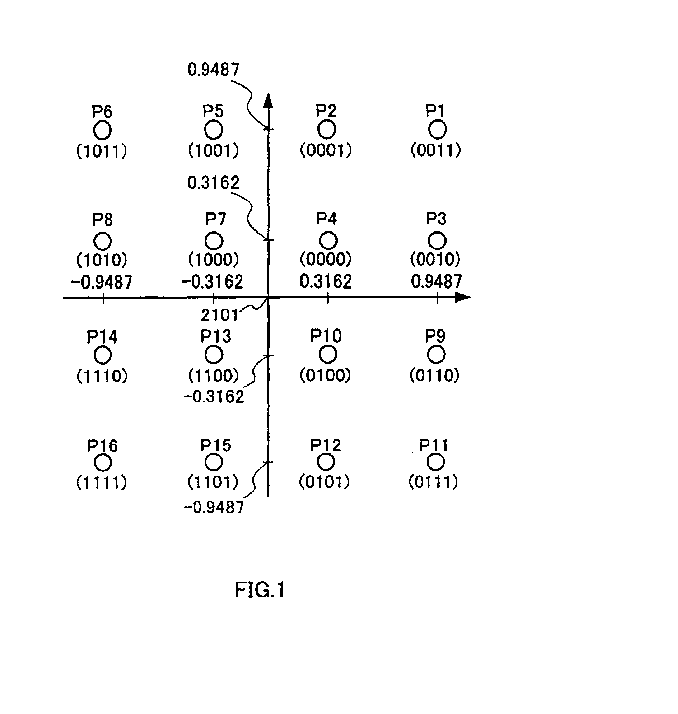

The method of finding the reference points on the I-Q plane from the average power will now be explained using FIG.1. In 3rd Generation Partnership Project (3GPP) TR25.848 Ver. 4. 0. 0, the position of each reference point when the average power is 1 is determined. FIG.1 shows reference points P1 through P16 when the average power is 1. Each reference point has the bit configuration shown in FIG.1. P1, P2, P5, and P6 have a Q-axis value of 0.9487; P3, P4, P7, and P8 have a Q-axis value of 0. 3162; P9, P10, P13, and P14 have a Q-axis value of -0.3162; and P11, P12, P15, and P16 have a Q-axis value of -0. 9487. Also, P1, P3, P9, and P11 have an I-axis value of 0.9487; P2, P4, P10, and P12 have an I-axis value of 0.3162; P5, P7, P13, and P15 have an I-axis value of - 0.3162; and P6, P8, P14, and P16 have an I-axis value of -0.9487. The distance between each of referencepoints P1 through P16 and the origin point 2101 is the numeric value when the average power is 1, and the square root of the sum of the square of ±0.9487 and the square of ±0.3162 is 1. Therefore, when the average power is a numeric value other than 1, the positions of the reference points move in accordance with the square root of the increment/decrement ratio with respect to average power 1, and therefore the reference points can be found by calculating the average power.

However, in a conventional radio apparatus, if the number of 1s and number of 0s of the data signal transmitted are not equal, the average power cannot be calculated with a high degree of accuracy, and there is consequently aproblemof errors occurringwhenreceiveddata is decoded. When the time over which power is averaged is short, in particular, there is a high probability of a large difference between the number of 1s and number of 0s in the transmitted data signal, with a consequent problem of a high probability of error occurrence when received data is decoded.

### Disclosure of Invention

It is an object of the present invention to decode received data without errors by finding I-Q plane reference points with a high degree of accuracy by means of a simple circuit configuration.

This object can be achieved by having a base station apparatus obtain the XOR of a predetermined signal sequence comprising an equal number of 0s and 1s, and data, with an XOR operational circuit, and generate and transmit data, in which the number of 0s and number of 1s are the same or nearly the same, to a mobile station apparatus; and having the mobile station apparatus obtain the average power from the received data, and find reference points of 16 values in the I-Q plane from the average power.

### Brief Description of Drawings

FIG.1 is a drawing explaining 16QAM reference points on the I-Q plane;
FIG.2 is a block diagram showing the configuration of a base station apparatus according to Embodiment 1 of the present invention;
FIG.3 is a block diagram showing the configuration of a mobile station apparatus according to Embodiment 1 of the present invention;
FIG.4 is a block diagram showing the configuration of a randmization section according to Embodiment 1 of the present invention;
FIG.5 is a drawing explaining computation by a randmization section according to Embodiment 1 of the present invention;
FIG.6 is a drawing explaining computation by a randomization nullification section according to Embodiment 1 of the present invention;
FIG.7 is a drawing explaining computation by a randmization section according to Embodiment 1 of the present invention;
FIG.8 is a drawing explaining computation by a randomization nullification section according to Embodiment 1 of the present invention;
FIG.9 is a drawing explaining computation by a randmization section according to Embodiment 1 of the present invention;
FIG.10 is a drawing explaining computation by a randomization nullification section according to Embodiment 1 of the present invention;
FIG.11 is a block diagram showing the configuration of a base station apparatus according to Embodiment 2 of the present invention;
FIG. 12 is a block diagram showing the configuration of a mobile station apparatus according to Embodiment 2 of the present invention;
FIG.13 is a block diagram showing the configuration of a randmization section according to Embodiment 2 of the present invention;
FIG.14 is a drawing explaining computation by a randmization section according to Embodiment 2 of the present invention;
FIG.15 is a drawing explaining computation by a randomization nullification section according to Embodiment 2 of the present invention;
FIG.16 is a block diagram showing the configuration of a randmization section according to Embodiment 3 of the present invention;
FIG.17 is a drawing explaining computation by a randmization section according to Embodiment 3 of the present invention;
FIG.18 is a drawing explaining computation by a randomization nullification section according to Embodiment 3 of the present invention;
FIG.19 is a block diagram showing the configuration of a randmization section according to Embodiment 4 of the present invention;
FIG.20 is a drawing explaining computation by a randmization section according to Embodiment 4 of the present invention;
FIG.21 is a drawing explaining computation by a randomization nullification section according to Embodiment 4 of the present invention; and
FIG.22 is a block diagram showing the configuration of a randmization section according to Embodiment 5 of the present invention

### Best Mode for Carrying out the Invention

### (Embodiment 1)

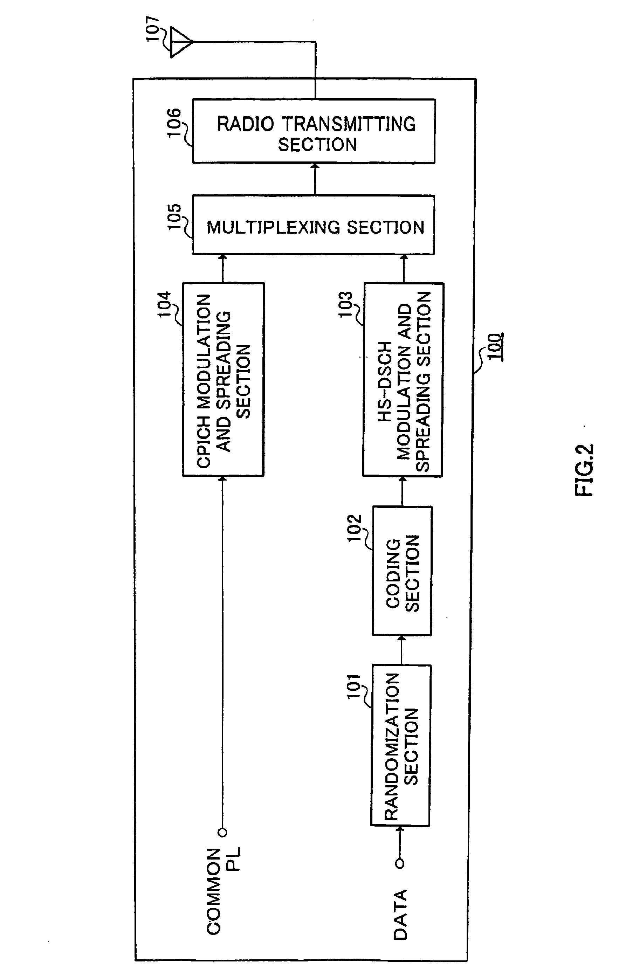

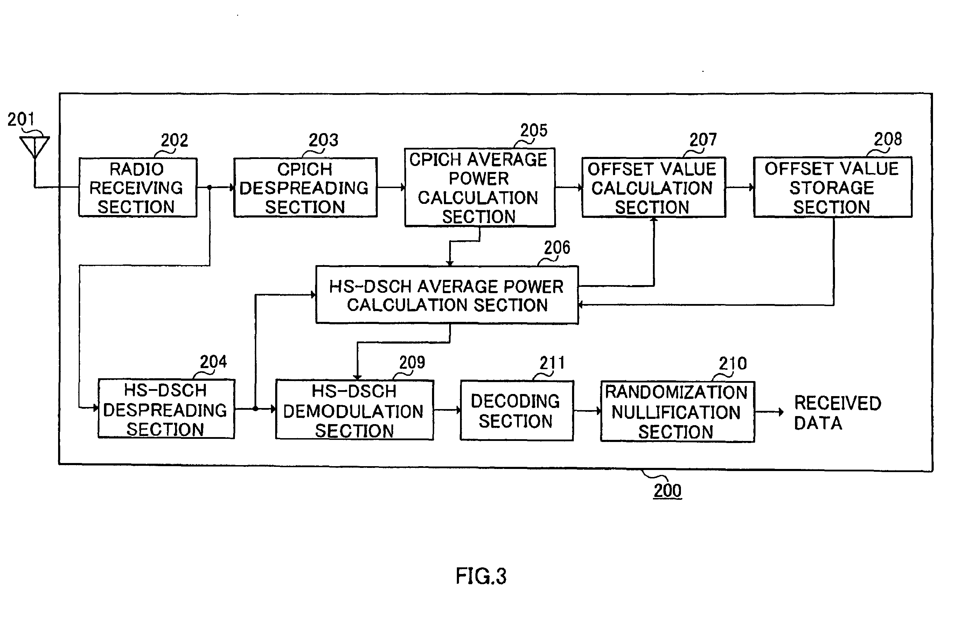

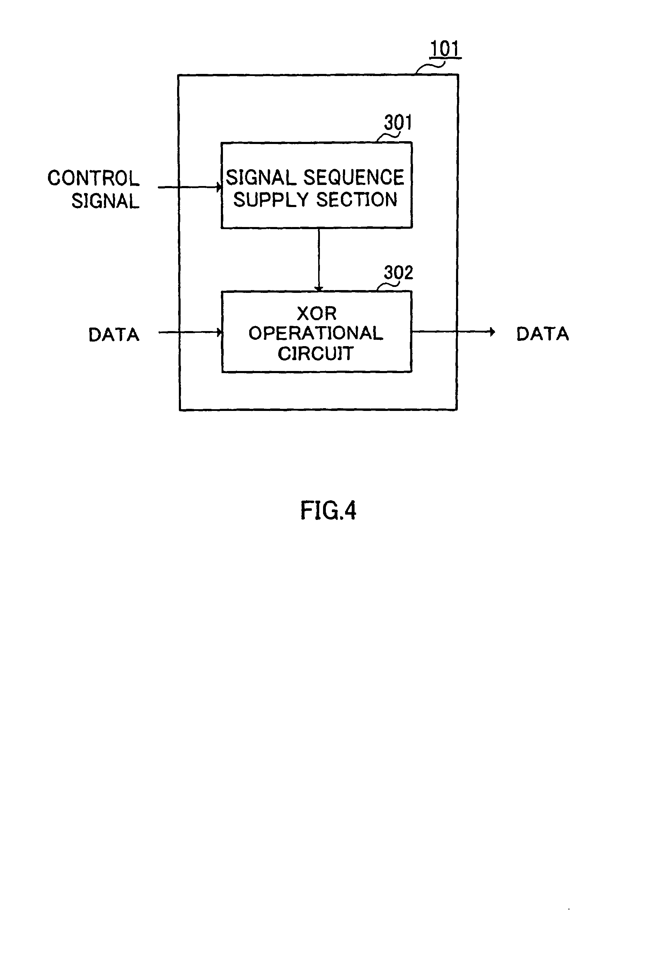

Embodiment 1 of the present invention will now be described using FIG.2 through FIG.5. FIG.2 is a block diagram showing a base station apparatus 100, FIG.3 is a block diagram showing a mobile station apparatus 200, and FIG. 4 is a block diagram showing a randmization section 101.

First, the configuration of base station apparatus 100 will be described.

By XORing a predetermined signal sequence comprising an equal number of 0s and 1s with data, randmization section 101 makes the number of 0s and number of 1s in the data the same or nearly the same (hereinafter referred to as "random"), and outputs the result to a coding section 102. Details of the configuration of randmization section 101 will be given later herein.

Coding section 102 performs coding of the random data input from randmization section 101, and outputs the result to an HS-DSCH modulation and spreading section 103.

HS-DSCH modulation and spreading section 103 performs QAM modulation or phase modulation of the data input from coding section 102, spreads the modulated signal with a spreading code specific to the communicating mobile station apparatus, and outputs the result to a multiplexing section 105.

A CPICH modulation and spreading section 104 modulates a common pilot signal transmitted by a CPICH, using a predetermined modulation method, multiplies the modulated common pilot signal by a spreading code common to all mobile station apparatuses, and outputs the result to multiplexing section 105.

Multiplexing section 105 multiplexes the spread signals from HS-DSCH modulation and spreading section 103 and CPICH modulation and spreading section 104, and outputs the result to a radio transmitting section 106.

Radio transmitting section 106 performs predetermined radio processing (such as up-conversion) on the multiplexed transmit signal from multiplexing section 105, and performs radio transmission of the resulting signal to mobile station apparatuses via an antenna 107.

Next, the configuration of mobile station apparatus 200 will be described.

A radio receiving section 202 performs predetermined radio reception processing (such as down-conversion) on a reception signal received via an antenna 201. Radio receiving section 202 also performs channel-by-channel separation of the signal on which radio reception processing has been performed, and outputs the resulting signals to a CPICH despreading section 203 and an HS-DSCH despreading section 204. That is to say, the signal transmitted using the CPICH is output to CPICH despreading section 203, and the signal transmitted using the HS-DSCH is output to HS-DSCH despreading section 204.

CPICH despreading section 203 despreads the output (common known signal) from radio receiving section 202 with a predetermined spreading code, and outputs the resulting signal to a CPICH average power calculation section 205.

HS-DSCH despreading section 204 despreads the output from radio receiving section 202 with a predetermined spreading code, and outputs the resulting signal to an HS-DSCH average power calculation section 206 and an HS-DSCH demodulation section 209.

CPICH average power calculation section 205 obtains the average power from the common known signal, and outputs the obtained average power to an offset value calculation section 207 and HS-DSCH average power calculation section 206. The average power is obtained by finding the power value for each data symbol, adding all these values together, and dividing the total by the number of symbols. If the data has been randomized, the average power can be obtained with a high degree of accuracy, and if the average power is obtained with a high degree of accuracy, the 16-value reference points can be found with a high degree of accuracy.

HS-DSCH average power calculation section 206 obtains the average power based on data input from HS-DSCH despreading section 204, outputs the obtained average power to offset value calculation section 207 and an HS-DSCH demodulation section 209. The average power is obtained by finding the power value for each symbol, adding all these values together, and dividing the total by the number of symbols.

Offset value calculation section 207 finds an offset value from the average power obtained by CPICH average power calculation section 205 and the average power obtained by HS-DSCH average power calculation section 206. The offset value is calculated by a subtraction operation on the average power obtained from the data and the average power obtained from the known signal. The offset value calculated in this way is output from offset value calculation section 207 to an offset value storage section 208.

Offset value storage section 208 stores the offset value calculated by offset value calculation section 207.

HS-DSCH demodulation section 209 finds 16QAM 16-value reference points based on the average power from HS-DSCH average power calculation section 206, and also performs demodulation processing on the data input from HS-DSCH despreading section 204 and outputs the demodulated data to a decoding section 211. Decoding section 211 performs decoding processing on the data demodulated by HS-DSCH demodulation section 209, and outputs the decoded data to a randomization nullification section 210.

Randomization nullification section 210 performs XORing of the same signal sequence as used in data randomization by randmization section 101 of base station apparatus 100, and the data, thereby restoring the data sequence prior to randomization by randmization section 101, and obtaining received data.

The configuration of randmization section 101 will now be described, using FIG.4. The configuration of randomization nullification section 210 is identical to the configuration of randmization section 101, and a description thereof will therefore be omitted.

A signal sequence supply section 301 supplies a signal sequence with the same number of 0s and 1s to an XOR operational circuit 302.

XOR operational circuit 302 XORs the signal sequence supplied from signal sequence supply section 301 with the data. Details of randomization process by randmization section 101 and randomization nullification processing by randomization nullification section 210 will be given later herein.

Next, the operation of base station apparatus 100 will be described. HS-DSCH data is randomized by randmization section 101 and output to coding section 102, and after undergoing coding processing in coding section 102, is output to HS-DSCHmodulation and spreading section 103. The HS-DSCH data is then QAM modulated or phase modulated and spread with a spreading code specific to the communicating mobile station apparatus in HS-DSCH modulation and spreading section 103, and is output to multiplexing section 105. Meanwhile, in CPICH modulation and spreading section 104, a CPICH common known signal is modulated using a predetermined modulation method, and the modulated common known signal is multipliedby a spreading code common to all mobile station apparatuses and is output to multiplexing section 105. Then, after being multiplexed by multiplexing section 105, the CPICH common known signal is output to radio transmitting section 106, undergoes predetermined radio transmission processing (such as up-conversion) , and is transmitted to mobile station apparatuses as a radio signal via antenna 107.

Next, the operation of mobile station apparatus 200 will be described. A multiplex signal transmitted from base station apparatus 100 is received as a radio signal from radio receiving section 202 via antenna 201, and is despread on a channel-by-channel basis by means of CPICH despreading section 203 and HS-DSCH despreading section 204. The common known signal transmitted using the CPICH is despread by CPICH despreading section 203 and output to CPICH average power calculation section 205. Data transmitted using the HS-DSCH, on the other hand, is despread by HS-DSCH despreading section 204 and output to CPICH average power calculation section 205 and HS-DSCH average power calculation section 206.

One data TTI is composed of 3 slots. Data processing differs for slot 1 and for slots 2 and 3, and therefore subsequent operation will be described for each slot.

For the first slot, HS-DSCH average power calculation section 206 obtains the average power using data input from HS-DSCH despreading section 204, and outputs the obtained average power to HS-DSCH demodulation section 209 and offset value calculation section 207. HS-DSCH demodulation section 209 uses the average power obtained by HS-DSCH average power calculation section 206 to find the 16-value reference points. Offset value calculation section 207 finds an offset value by performing a subtraction operation on the average power obtained by CPICH average power calculation section 205 and the average power obtained by HS-DSCH average power calculation section 206, and stores the offset value found in this way in offset value storage section 208.

For the second slot and third slot, HS-DSCH average power calculation section 206 obtains the average power using the offset value stored in offset value storage section 208 and the average power obtained by CPICH average power calculation section 205, and outputs the obtained average power to HS-DSCH demodulation section 209, which finds the 16-value reference points. For the second slot and third slot, it is also possible to find the average power without using an offset value, and find the reference points from the obtained average power each time. Also, the number of slots of one TTI may be other than 3.

Operation after demodulation by HS-DSCH demodulation section 209 is the same for all slots. The demodulated data is input to decoding section 211, undergoes decoding processing by decoding section 211 and is output to randomization nullification section 210, where it is XORed with the same signal sequence as used in XORing with data in randmization section 101. By this means, the data is restored to its state prior to randomization by randmization section 101, and received data is obtained.

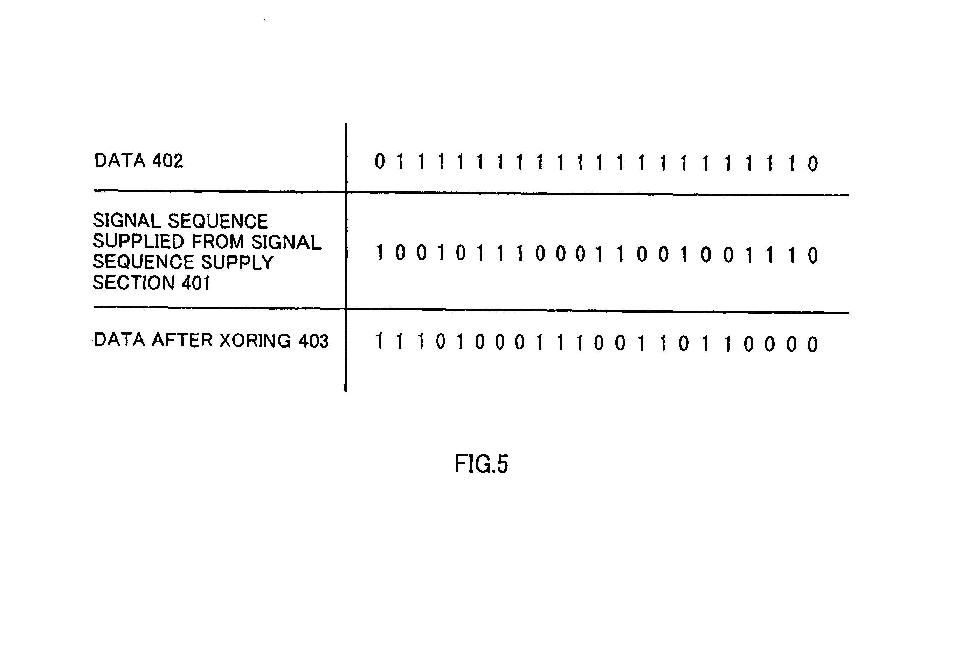

Next, the randomization method used by randmization section 101 will be described using FIG.4 and FIG.5. Signal sequence 401 with an arbitrary arrangement ("1001011100011001001110") shown in FIG.5, comprising the same number of 0s and 1s, is output to XOR operational circuit 302 . XOR operational circuit 302 performs an XOR operation on data 402 ("0111111111111111111110") with an arbitrary arrangement in which the number of 0s and the number of 1s are different, and signal sequence 401 supplied from signal sequence supply section 301. Data 403 resulting from the XOR operation is "1110100011100110110000", with the same number of 0s and 1s.

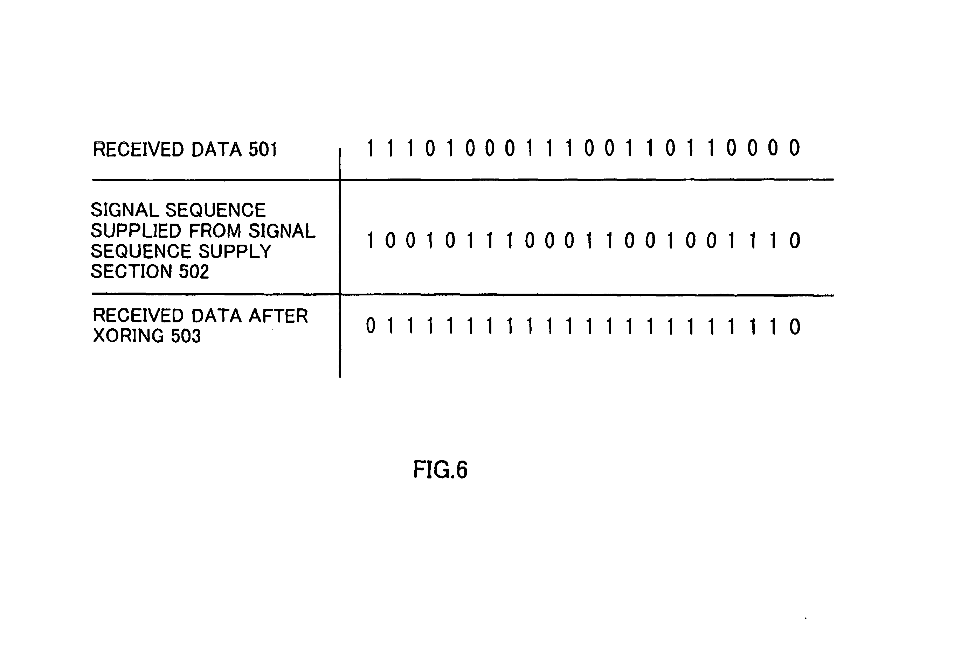

Next, the randomization nullification method used by randomization nullification section 210 will be described using FIG.4 and FIG.6. As shown in FIG.6, signal sequence supply section 301 outputs to XOR operational circuit 302 signal sequence 502 ("1001011100011001001110"), which is identical to signal sequence 401 supplied to XOR operational circuit 302 by signal sequence supply section 301 of randmization section 101. XOR operational circuit 302 XORs received data 501 ("1110100011100110110000") and signal sequence 502. Data 503 resulting from the XOR operation is "0111111111111111111110", restoring data with the same arrangement as the data prior to randomization by randmization section 101. The arrangement of signal sequences 401 and 502 supplied fromsignal sequence supply section 301 is not limited to the above arrangement, but may be any arrangement that has the same number of 0s and 1s.

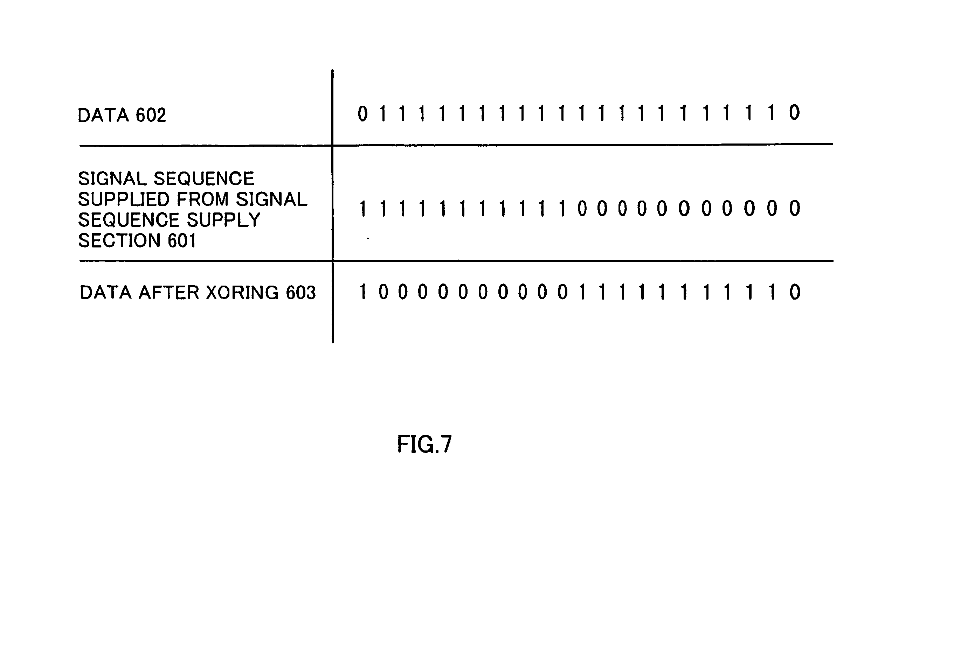

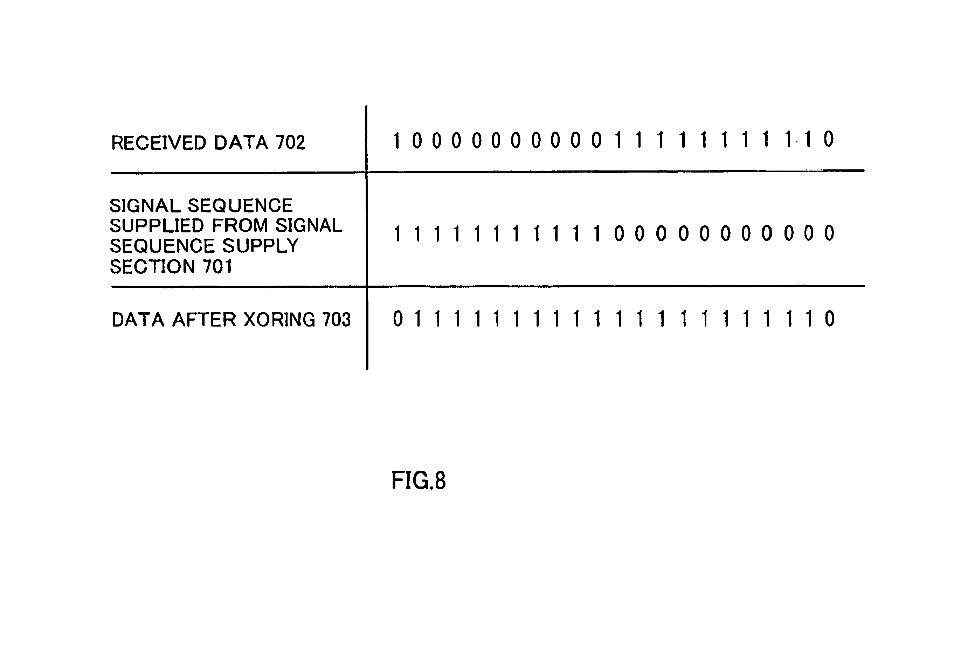

A case will now be described, using FIG.7 and FIG. 8, in which signal sequences different from the above are suppliedfromsignalsequencesupplysection301. Signal sequence 601 with a simple arrangement comprising "1111111111100000000000" is supplied from signal sequence supply section 301 to XOR operational circuit 302, and when XOR operational circuit 302 XORs "0111111111111111111110" data 602 with signal sequence 601, the result is "1000000000011111111110" signal sequence 603 data. On the other hand, randomization nullification section 210 supplies to XOR operational circuit 302 signal sequence 701 ("1111111111100000000000"), which is identical to signal sequence 601 supplied from signal sequence supply section 301 of randmization section 101. When XOR operational circuit 302 XORs signal sequence 701 with data 702 ("1000000000011111111110"), data 703 ("0111111111111111111110"), with the same arrangement as the data prior to randomization by randmization section 101, is restored.

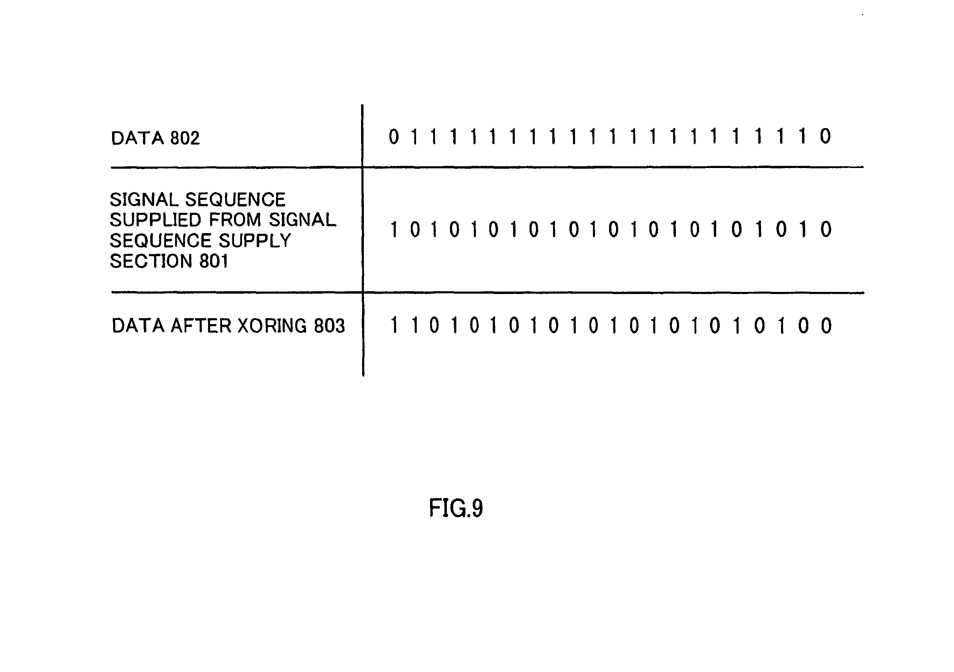

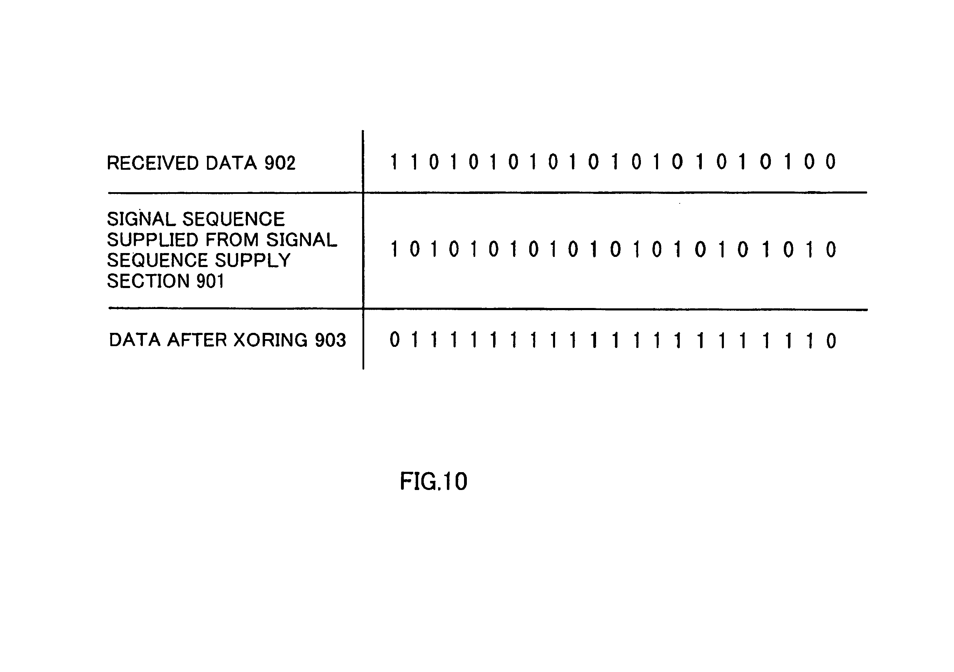

A further case will be described, using FIG.9 and FIG. 10, inwhich signal sequences different from the above are supplied from signal sequence supply section 301. Signal sequence 801 with a simple arrangement comprising "1010101010101010101010" is supplied from signal sequence supply section 301 to XOR operational circuit 302, and when XOR operational circuit 302 XORs "0111111111111111111110" data 802 with signal sequence 801, the result is "1000000000011111111110" signal sequence 803 data. On the other hand, randomization nullification section 210 supplies to XOR operational circuit 302 signal sequence 901 ("1010101010101010101010"), which is identical to signal sequence 801 supplied from signal sequence supply section 301 of randmization section 101. When XOR operational circuit 302 XORs signal sequence 901 with data 902 ("1101010101010101010100"), data 903 ("0111111111111111111110"), with the same arrangement as the data prior to randomizationby randmization section 101, is restored. The arrangement of signal sequences supplied from signal sequence supply section 301 is not limited to the above arrangement, but may be any arrangement that has the same number of 0s and 1s.

Thus, according to a transmitting apparatus and transmission method of Embodiment 1, mobile station apparatus 200 obtains the average power using data randomized by randmization section 101 of base station apparatus 100, as a result of which the average power can be obtained with a high degree of accuracy and 16-value reference points can be obtained with a high degree of accuracy, thereby enabling received data to be decoded without errors . Moreover, a signal sequence with the same number of 0s and 1s is XORed with data in XOR operational circuit 302 of base station apparatus 100, enabling transmit data to be randomized by means of a simple configuration, and base station apparatus 100 to be made small in size. Furthermore, 16-value reference points are determined based on data received by mobile station apparatus 200, enabling the transmission capacity of a transmit signal transmitted from base station apparatus 100 to mobile station apparatus 200 to be made large. Still further, an offset value is found using average power obtained with a high degree of accuracy, and 16-value reference points of the second and third slots are found using this offset value, with the result that 16-value reference points can also be found with a high degree of accuracy for the second and third slots.

In this embodiment, only one each of randmization section 101, coding section 102, and HS-DSCH modulation and spreading section 103 are provided in base station apparatus 100, but a similar effect can also be obtained when a plurality of these sections are provided. Also, only one each of HS-DSCH despreading section 204, HS-DSCH demodulation section 209, randomization nullification section 210, and decoding section 211 are provided in mobile station apparatus 200, but a similar effect can also be obtained when a plurality of these sections are provided. Furthermore, in this embodiment, a case has been described in which communication is performed between base station apparatus 100 and one mobile station apparatus 200, but there may also be a plurality of mobile station apparatuses 200 performing communication with base station apparatus 100.

### (Embodiment 2)

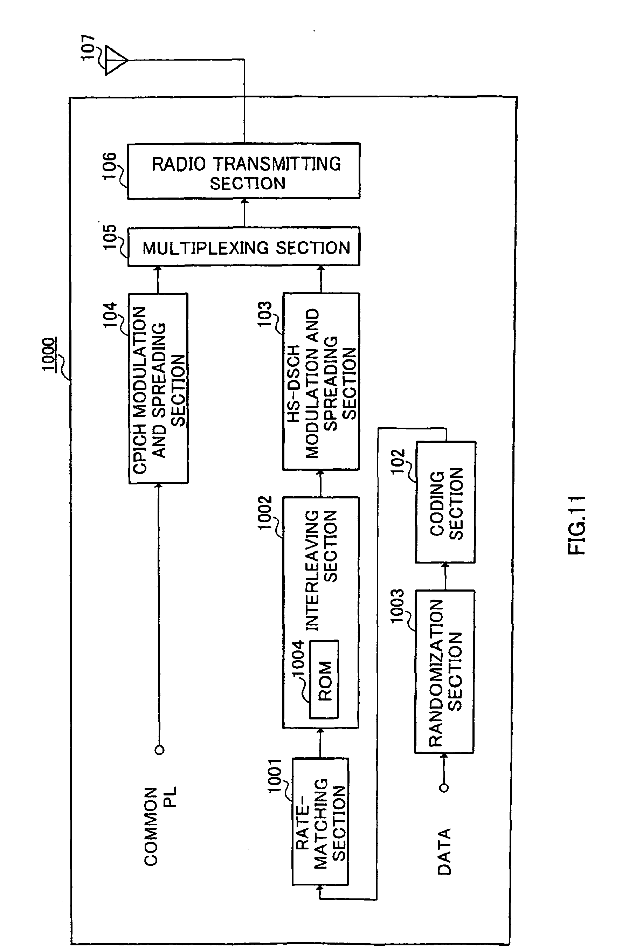

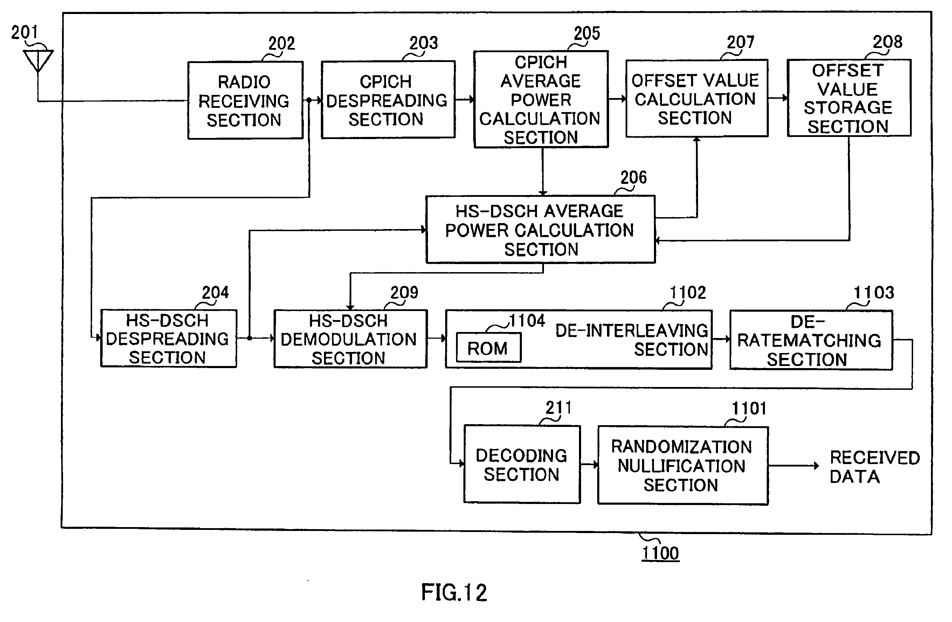

FIG. 11 is a block diagram showing the configuration of a base station apparatus 1000 according to Embodiment 2, and FIG. 12 is a block diagram showing the configuration of a mobile station apparatus 1100 according to Embodiment 2. The configuration in FIG.11 is identical to that in FIG. 2, except for the provision of a rate-matching section 1001, interleaving section 1002, and algorithm storage section 1004 on the HS-DSCH data processing side, and therefore parts in FIG.11 identical to those in FIG.2 are assigned the same codes as in FIG.2 and their detailed explanations are omitted. Also, the configuration in FIG.12 is identical to that in FIG.3, except for the provision of a de-interleaving section 1102, de-rate-matching section 1103, and algorithm storage section 1104 on the HS-DSCH data processing side, and therefore parts in FIG.12 identical to those in FIG.3 are assigned the same codes as in FIG.3 and their detailed explanations are omitted.

First, the configuration of base station apparatus 1000 will be described using FIG.11.

Rate-matching section 1001 increases or decreases data in the HS-DSCH so that the data of each transport channel is accommodated in one TTI.

Interleaving section 1002 comprises ROM 1004. Interleaving section 1002 performs data rearrangement based on an algorithm stored in ROM 1004 so that data can be demodulated even if consecutive errors (burst errors) occur.

A randmization section 1003 randomizes data based on an algorithm described later herein, and outputs the randomized data to coding section 102. Details of randmization section 1003 will be given later herein.

The configuration of mobile station apparatus 1100 will now be described, using FIG.12.

A randomization nullification section 1101 performs data rearrangement based on an algorithm described later herein, and restores the data arrangement prior to randomization by randmization section 1003 of base station apparatus 1000.

De-interleaving section 1102 is provided with ROM 1104, which stores an algorithm for rearranging data. By this means, de-interleaving section 1102 performs data rearrangement on data input from HS-DSCH demodulation section 209, based on the algorithm stored in ROM 1104, restores the data arrangement to the data arrangement order prior to rearrangement by de-interleaving section 1102 of base station apparatus 1000, and outputs the data to de-rate-matching section 1103.

De-rate-matching section 1103 separates HS-DSCH data input from de-interleaving section 1102 into data of each transport channel, and outputs the data to decoding section 211.

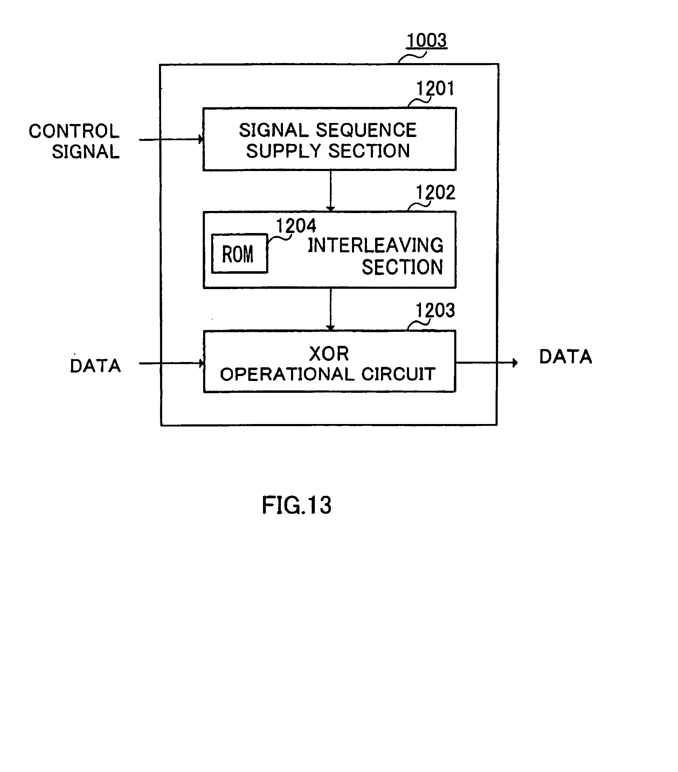

Next, the configuration of randmization section 1003 and randomization nullification section 1101 will be described, using FIG.13. As randmization section 1003 and randomization nullification section 1101 have the same configuration, a description of randomization nullification section 1101 is omitted.

A signal sequence supply section 1201 supplies a signal sequence with a simple arrangement, containing an equal number of 0s and 1s, to an interleaving section 1202.

Interleaving section 1202 is provided with ROM 1204. ROM 1204 stores an algorithm for rearranging the signal sequence supplied from signal sequence supply section 1201. Thus, interleaving section 1202 performs rearrangement of the signal sequence supplied from signal sequence supply section 1201 based on the algorithm stored in ROM 1204, and outputs the rearranged signal sequence to an XOR operational circuit 1203.

XOR operational circuit 1203 XORs the signal sequence output from interleaving section 1202 with the data. The algorithm stored in ROM 1204 of randmization section 1003 and the algorithm stored in ROM 1004 of interleaving section 1002 are the same.

Next, the operation of base station apparatus 1000 and mobile station apparatus 1100 according to this embodiment will be described, using FIG.11 and FIG.12.

First, the operation of base station apparatus 1000 will be described. HS-DSCH data is randomized by randmization section 1003. In the processing performed by randmization section 1003, rearrangement of the signal sequence from signal sequence supply section 1201 is performed based on the algorithm stored in ROM 1204, and data is randomized by XORing that rearranged signal sequence with the data. The randomized data is output from randmization section 1003 to coding section 102, undergoes coding processing by coding section 102, and is output to rate-matching section 1001. The data output to rate-matching section 1001 undergoes rate-matching processing by rate-matching section 1001 and is output to interleaving section 1002, where it undergoes interleaving processing. In the processing by interleaving section 1002, data rearrangement is performed based on the algorithm stored in ROM 1004. The data rearranged by interleaving section 1002 is output to HS-DSCH modulation and spreading section 103. Subsequent HS-DSCH modulation and spreading section 103 operations and CPICH operations are identical to those in Embodiment 1 above, and therefore a description thereof is omitted.

Next, the operation of mobile station apparatus 1100 will be described. The operation sequence after a multiplex signal from base station apparatus 1000 is received at antenna 201, up to and including the operation in HS-DSCH demodulation section 209, is identical to that in Embodiment 1 above, and therefore a description thereof is omitted. Data demodulated by HS-DSCH demodulation section 209 is output to de-interleaving section 1102. The data output to de-interleaving section 1102 undergoes data rearrangement based on the algorithm stored in ROM 1104, restoring the data arrangement prior to rearrangement by interleaving section 1002 of base station apparatus 1000, and is output to de-rate-matching section 1103. The data input to de-rate-matching section 1103 undergoes processing corresponding to the rate-matching processing prior to transmission, and is output to decoding section 211. The data input to decoding section 211 undergoes decoding processing by decoding section 211, and is input to randomization nullification section 1101. The data input to randomization nullification section 1101 is restored to the data arrangement prior to randomizing by randmization section 1003 of base station apparatus 1000, based on the algorithm stored in ROM 1204 of randomization nullification section 1101, and becomes received data.

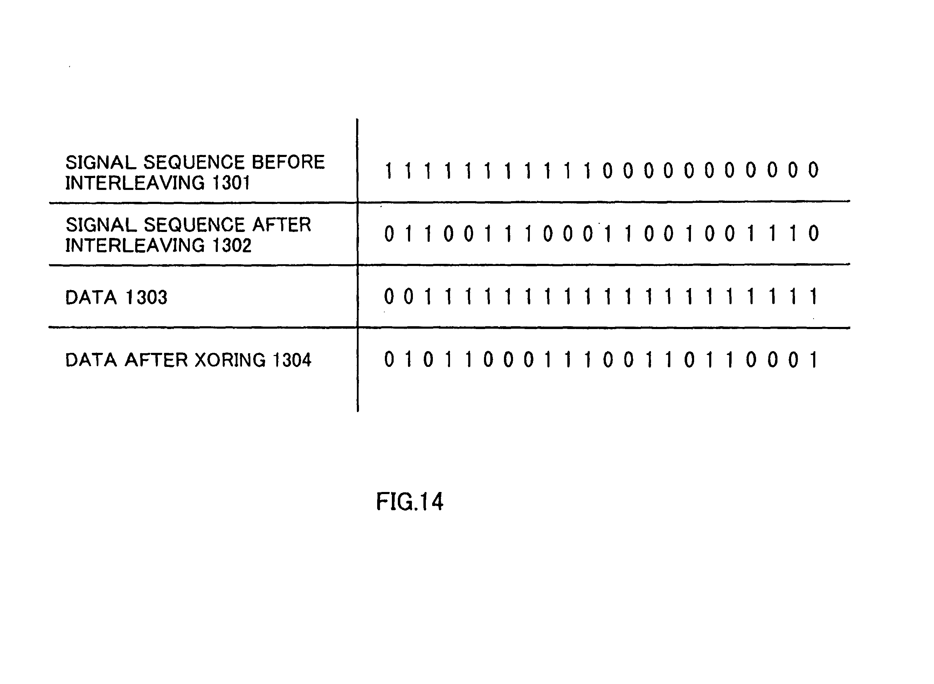

Next, the randomization method used by randmization section 1003 will be described using FIG.13 and FIG.14. Signal sequence 1301 shown in FIG.14, with a simple "1111111111100000000000" arrangement comprising the same number of 0s and 1s, is output to interleaving section 1202. Interleaving section 1202 performs rearrangement of signal sequence 1301 based on the algorithm stored in ROM 1204, giving "0110011100011001001110" signal sequence 1302 in FIG.14. Interleaving section 1202 outputs this signal sequence 1302 to XOR operational circuit 1203. XORoperational circuit 1203 XORs data 1303 comprising an arbitrary arrangement of "0011111111111111111111" with signal sequence 1302 supplied from interleaving section 1202. Data 1304 resulting from the XOR operation is "0101100011100110110001", being randomized data.

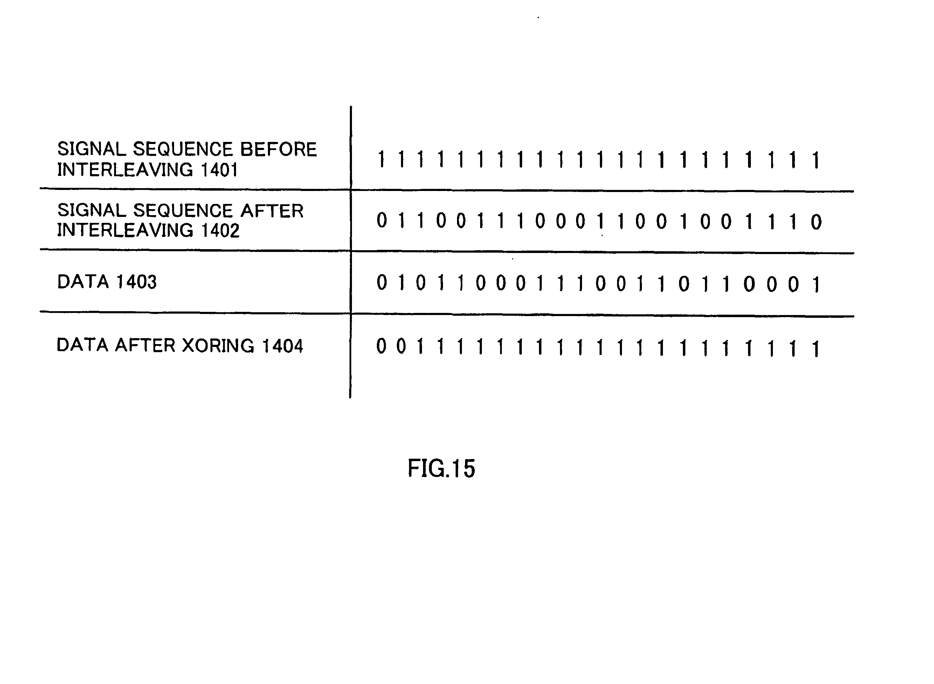

Next, the randomization nullification method used by randomization nullification section 1101 will be described using FIG.13 and FIG.15. As shown in FIG.13, signal sequence supply section 1201 outputs to interleaving section 1202 the same signal sequence 1401 as from signal sequence supply section 1201 of randmization section 1003, and rearrangement is performed in accordance with the algorithm stored in ROM 1204 of interleaving section 1202, giving signal sequence 1402 ("0110011100011001001110") which is identical to signal sequence 1302 supplied from interleaving section 1202 of randmization section 1003. Interleaving section 1202 outputs signal sequence 1402 to XOR operational circuit 1203. XOR operational circuit 1203 XORs "0101100011100110110001" data 1403 with signal sequence 1402, giving data signal sequence 1404 ("0011111111111111111111"), the data signal sequence prior to randomization by randmization section 1003. The arrangement of signal sequences 1302 and 1402 rearranged by interleaving section 1202 is not limited to the above arrangement, but may be any arrangement that has the same number of 0s and 1s. Also, a similar effect can be obtained if pre-interleaving signal sequences 1301 and 1401 have an arrangement other than that shown in this embodiment, as long as the arrangement is simple.

Thus, according to a transmitting apparatus and transmission method of Embodiment 2, in addition to provision of the effects of Embodiment 1 above, algorithms stored in ROM 1004 of interleaving section 1002, ROM 1204 of randmization section 1003, and ROM 1204 of randomization nullification section 1101 are identical, and signal sequence rearrangement is performed using the same algorithm as used in interleaving processing, so that it is not necessary to store a signal sequence arrangement to be XORed with data in both randmization section 1003 and randomization nullification section 1101, thus rendering a storage section unnecessary, and simplifying the circuit configuration. Moreover, the signal sequence supplied from signal sequence supply section 1201 has a simple arrangement, making signal sequence setting easy.

In this embodiment, interleaving section 1002 and interleaving section 1202 in randmization section 1003 are assumed to be separate circuits, but it is also possible for these sections to be combined into a single interleaving section as long as a time difference is provided between data interleaving processing and signal sequence interleaving processing. In this case, base station apparatus 1000 and mobile station apparatus 1100 can be made smaller. Also, the algorithm stored in ROM 1104 of de-interleaving section 1102 and the algorithm stored in ROM 1204 of randmization section 1003 and randomization nullification section 1101 may be made the same. Furthermore, as long as the same algorithm is stored in ROM 1204 of randmization section 1003 and randomization nullification section 1101, it need not be the same as another.

In this embodiment, only one each of randmization section 1003, coding section 102, and HS-DSCH modulation and spreading section 103 are provided in base station apparatus 1000, but a similar effect can also be obtained when a plurality of these sections are provided. Also, only one each of HS-DSCH despreading section 204, HS-DSCH demodulation section 209, decoding section 211, and randomization nullification section 1101 are provided in mobile station apparatus 1100, but a similar effect can also be obtained when a plurality of these sections are provided. Moreover, rearrangement may be performed by means of circuitry, without storing algorithms in ROM 1004, 1104, and 1204. Furthermore, in this embodiment, a case has been described in which communication is performed between base station apparatus 1000 and one mobile station apparatus 1100, but there may also be a plurality of mobile station apparatuses 1100 performing communication with base station apparatus 1000.

### (Embodiment 3)

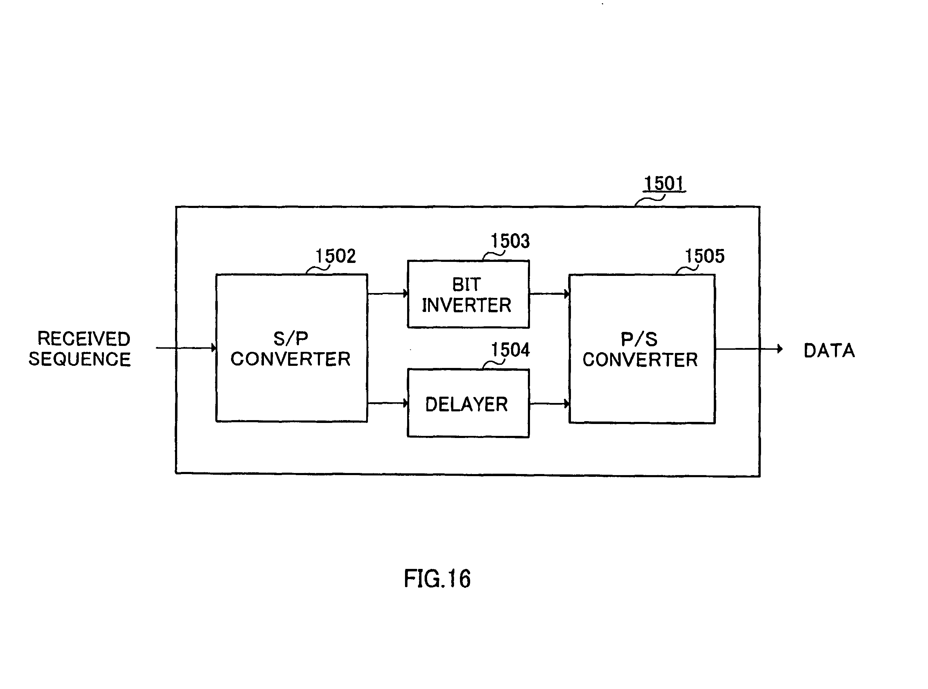

FIG. 16 is a block diagram showing the configuration of a randmization section 101 according to Embodiment 3. Except for randmization section 101, the configurations of a base station apparatus and mobile station apparatus are identical to those in FIG.2 and FIG.3, and therefore corresponding descriptions are omitted. Also, a randomization nullification section according to this embodiment has the same configuration as randmization section 101 in FIG.16, and therefore a description of the configuration thereof is omitted.

An S/P converter 1502 makes one input data string into two strings on an alternating basis, and after making two strings, outputs one string to a bit inverter 1503, and outputs the other string to a delayer 1504.

Bit inverter 1503 inverts 0s and 1s in the input data, and outputs the resulting data to a P/S converter 1505.

Delayer 1504 imparts a delay to the input data, then outputs the data to P/S converter 1505. Delayer 1504 is provided in consideration of the delay due to processing by bit inverter 1503.

P/S converter 1505 makes the two data strings output from bit inverter 1503 and delayer 1504 into a single string on an alternating basis.

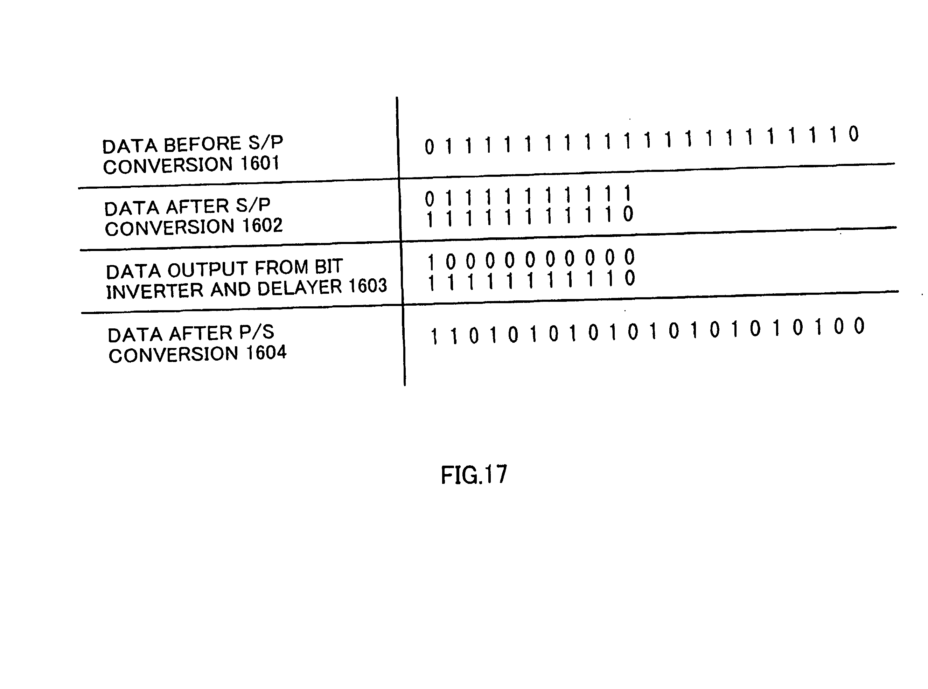

Next, the randomi zation method used by randmi zation section 101 will be described using FIG.16 and FIG.17. Data 1601 ("0111111111111111111110") prior to input to S/P converter 1502 becomes signal sequences 1602 comprising two strings, "01111111111" and "11111111110" after S/P conversion. The "01111111111" signal sequence data is input to bit inverter 1503, and the "11111111110" signal sequence data is input to delayer 1504. The data input to bit inverter 1503 has 1s converted to 0s and 0s converted to 1s on a bit-by-bit basis, giving "10000000000", which is output to P/S converter 1505. The data input to delayer 1504 is delayed, and is then output to P/S converter 1505 as "11111111110". Signal sequences 1603, comprising inverted data output from bit inverter 1503 and data output from delayer 1504, are input to P/S converter 1505 and undergo P/S conversion to become "1101010101010101010100" signal sequence 1604.

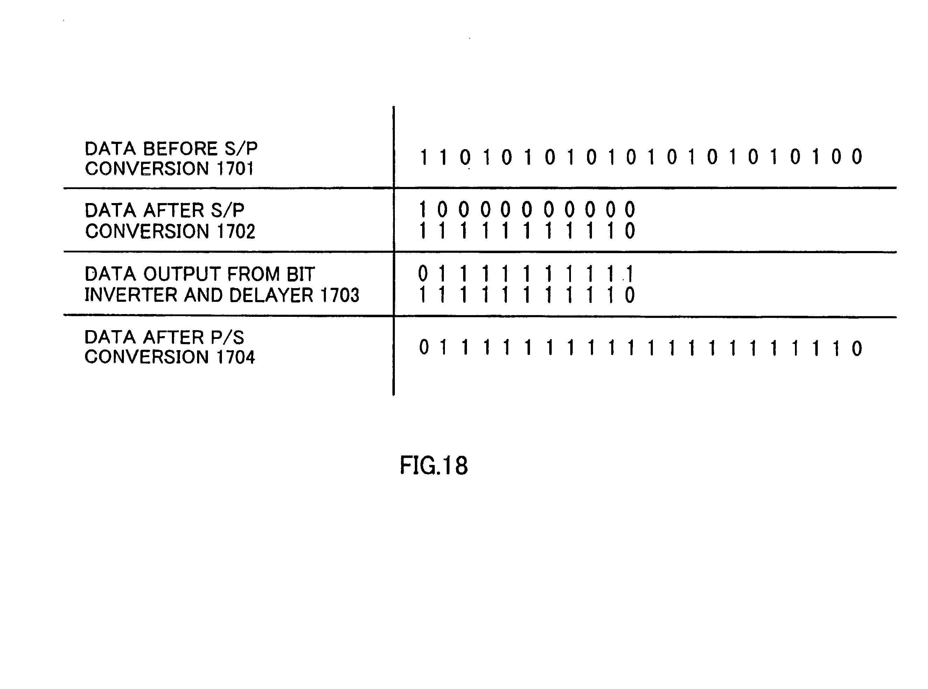

Next, the randomization nullification method used by the randomization nullification section will be described using FIG.16 and FIG.18. Signal sequence 1701 data comprising "1101010101010101010100" is received, and undergoes S/P conversion by S/P converter 1502 to become signal sequences 1702 comprising two strings of data, "10000000000" and "11111111110". Then the "10000000000" data is input to bit inverter 1503 where 1s are inverted to 0s and 0s are inverted to 1s on a bit-by-bit basis, giving "01111111111", which is output to P/S converter 1505. The signal sequence 1702 "11111111110" data is input to delayer 1504, and after being delayed is output to P/S converter 1505. Signal sequences 1703, comprising the two strings of "01111111111" output from bit inverter 1503 and "11111111110" output from delayer 1504, undergo P/S conversion by P/S converter 1505, giving signal sequence 1704 data "0111111111111111111110". Thus, the data output from P/S converter 1505 is restored to the data arrangement prior to randomization by the randomization nullification section.

Thus, according to a transmitting apparatus and transmission method of Embodiment 3, mobile station apparatus 200 obtains the average power using data randomized by randmization section 101 of base station apparatus 100, as a result of which 16-value reference points can be obtained with a high degree of accuracy, thereby enabling received data to be decoded without errors. Also, according to a transmitting apparatus and transmission method of Embodiment 3, it is not necessary for a signal sequence to be XORed for data randomization to be stored in both the base station apparatus and mobile station apparatus, rendering a storage section unnecessary and simplifying the circuit configuration.

Randmization section 101 in this embodiment may be replaced by randmization section 1003 in FIG.11. Also, while an S/P converter that performs division into two sequences has been used here, an S/P converter performing division into any number of sequences may be used, and a plurality of S/P converters 1502 may be provided. In this case, it is necessary to be able to input half of the total number of bits into bit inverter 1503, and greater randomization is possible.

### (Embodiment 4)

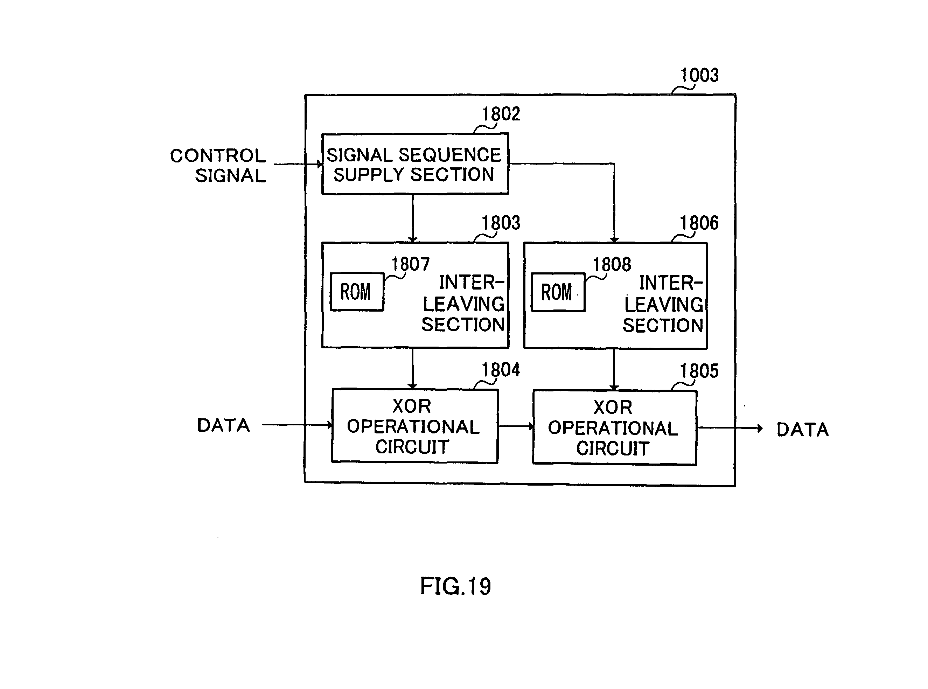

FIG.19 is a block diagram showing the configuration of a randmization section 1003 according to Embodiment 4. Except for randmization section 1003, the configurations of a base station apparatus and mobile station apparatus are identical to those in FIG.11 and FIG.12, and therefore corresponding descriptions are omitted. Also, a randomization nullification section according to this embodiment has the same configuration as randmization section 1003 in FIG.19, and therefore a description thereof is omitted.

A signal sequence supply section 1802 supplies a signal sequence with a random and simple arrangement to interleaving sections 1803 and 1806.

Interleaving section 1803 is provided with ROM 1807, rearranges a signal sequence supplied from signal sequence supply section 1802 based on an algorithm stored in ROM 1807, and outputs the rearranged signal sequence to an XOR operational circuit 1804.

XOR operational circuit 1804 XORs data with the signal sequence output from interleaving section 1803, and outputs the result to a following XOR operational circuit 1805.

XOR operational circuit 1805 XORs the data output from XOR operational circuit 1804 with the signal sequence output from interleaving section 1806.

Interleaving section 1806 is provided with ROM 1808, rearranges the signal sequence supplied from signal sequence supply section 1802 based on an algorithm stored in ROM 1808, and outputs the rearranged signal sequence to XOR operational circuit 1805. The algorithms stored in ROM 1004, 1807, and 1808 provided in interleaving sections 1002, 1803, and 1806 are all identical.

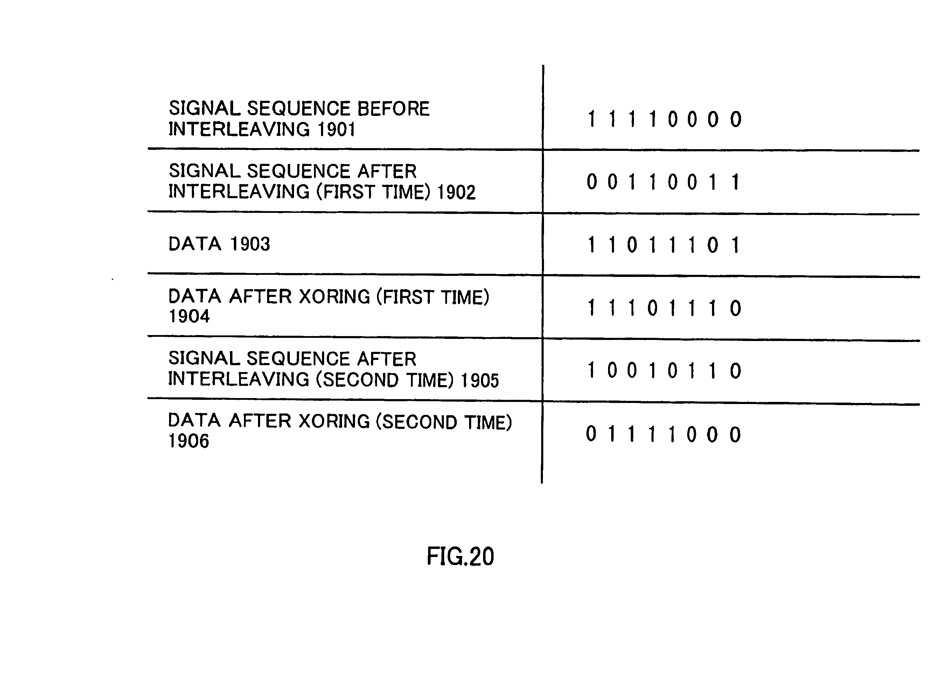

Next, the randomization method used by randmization section 1003 will be described using FIG.19 and FIG.20.

Signal sequence supply section 1802 outputs to interleaving section 1803 a signal sequence with a random and simple arrangement, such as "11110000" signal sequence 1901 shown in FIG.20.

Interleaving section 1803 performs rearrangement of signal sequence 1901 based on the algorithm stored in ROM 1807, giving a rearranged signal sequence 1902 of "00110011". Interleaving section 1803 outputs this signal sequence 1902 to XOR operational circuit 1804.

XOR operational circuit 1804 XORs "11011101" data 1903, which has an arbitrary arrangement and a different number of 0s and 1s, with signal sequence 1902 supplied from interleaving section 1803, and outputs the result to following XOR operational circuit 1805. Data 1904 after the XOR operation by XOR operational circuit 1804 is "11101110", but at this point the data has not yet been randomized.

Next, signal sequence 1901 is supplied from signal sequence supply section 1802 to interleaving section 1806, and interleaving section 1806 rearranges signal sequence 1901 based on the algorithm stored in ROM 1808, giving "10010110" signal sequence 1905, and outputs this signal sequence 1905 to XOR operational circuit 1805.

XOR operational circuit 1805 XORs data signal sequence 1904 XORed by XOR operational circuit 1804 with signal sequence 1905 output from interleaving section 1806, and the result of the XOR operation is random data 1906 comprising "01111000".

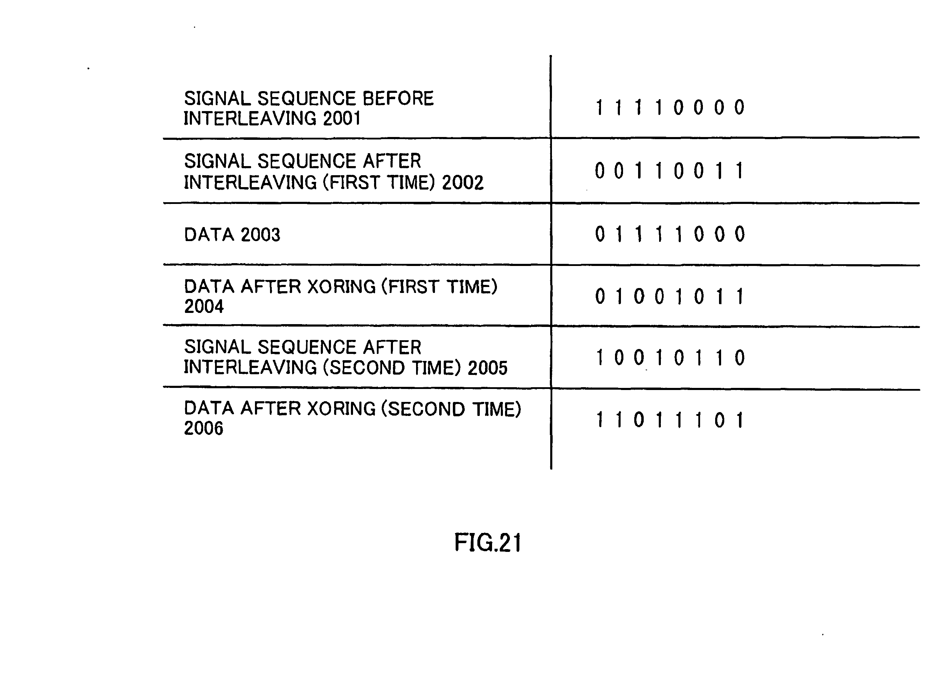

Next, the randomization nullification method used by the randomization nullification section will be described using FIG.19 and FIG.21.

Signal sequence supply section 1802 outputs to interleaving section 1803 a signal sequence with the same number of 0s and 1s and with a simple arrangement, such as "11110000" signal sequence 2001 shown in FIG.21.

Interleaving section 1803 performs rearrangement of signal sequence 2001 based on the algorithm stored in ROM 1807, giving a rearranged signal sequence 2002 of "00110011". Interleaving section 1803 outputs this signal sequence 2002 to XOR operational circuit 1804.

XOR operational circuit 1804 XORs data comprising "01111000" signal sequence 2003 with signal sequence 2002, and outputs the obtained data 2004, "01001011", to following XOR operational circuit 1805. Next, signal sequence 2001 is supplied from signal sequence supply section 1802 to interleaving section 1806, and interleavingsection1806rearrangessignalsequence2001 based on the algorithm stored in ROM 1808, giving "10010110" signal sequence 2005, and outputs this signal sequence 2005 to XOR operational circuit 1805. XOR operational circuit 1805 XORs data signal sequence 1904 XORed by XOR operational circuit 1804 with signal sequence 2005 output from interleaving section 1806. The result of the XOR operation is data signal sequence 2006 comprising "11011101", and the data prior to randomization by randmization section 1003 is restored. The arrangement of signal sequences 1902, 1905, 2002, and 2005 rearranged by interleaving sections 1803 and 1806 is not limited to the above arrangement, but may be any arrangement that has the same number of 0s and 1s. Also, a similar effect can be obtained if pre-interleaving signal sequences 1901 and 2001 have an arrangement other than that shown in this embodiment, as long as the arrangement is simple.

Thus, according to a transmitting apparatus and transmission method of Embodiment 4, in addition to provision of the effects of Embodiment 2 above, randomization can be performed with greater reliability since XORing is performed twice, by XOR operational circuits 1804 and 1805.

Any number may be used as the number of XOR operational circuits 1804 and 1805, and interleaving sections 1803 and 1806. Also, interleaving sections 1803 and 1806 may be made a single circuit, as long as interleaving processing is performed at different times. In this case, randmization section 1003 can be made smaller. Furthermore, randmization section 1003 in this embodiment may be replaced by randmization section 101 in FIG.2, and the randomization nullification section may be replaced by randomization nullification section 210 in FIG.3. Also, the number of interleaving processing at interleaving sections 1803 and 1806 is arbitrary. Also, the algorithm stored in ROM 1104 of de-interleaving section 1102 and the algorithm stored in ROM 1204 of randomization nullification section 1101 may be made the same. Furthermore, it is sufficient if only the algorithms stored in ROM 1204 of randmization section 1003 and randomization nullification section 1101 are the same.

### (Embodiment 5)

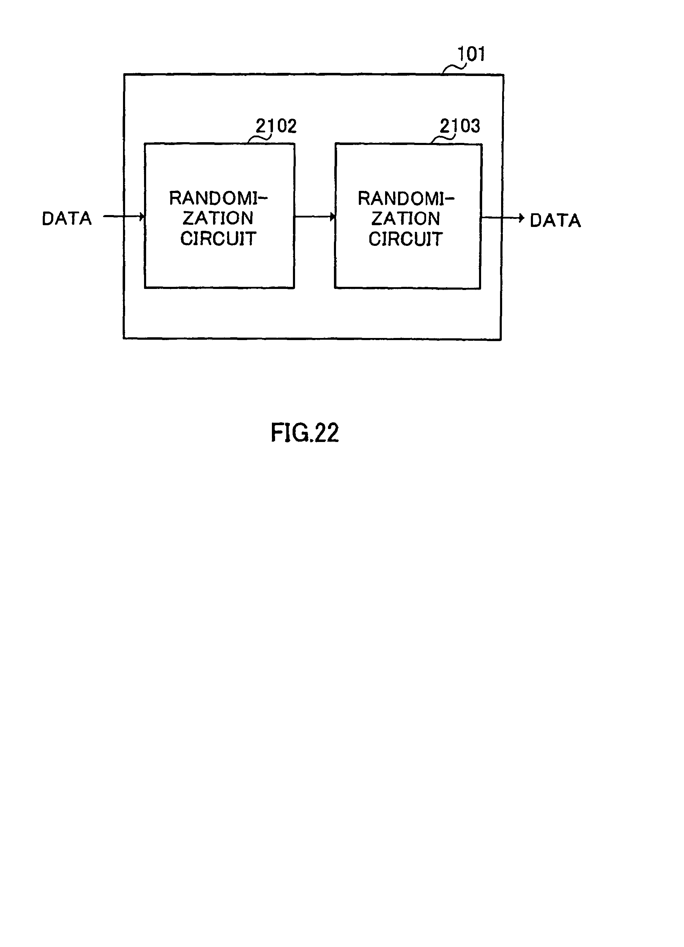

FIG.22 is a block diagram showing the configuration of a randmization section 101 according to Embodiment 5. Except for randmization section 101, the configurations of a base station apparatus and mobile station apparatus are identical to those in FIG.2 and FIG.3, and therefore corresponding descriptions are omitted. Also, a randomization nullification section according to this embodiment has the same configuration as randmization section 101 in FIG.22, and therefore a description thereof is omitted.

Randmization circuit 2102 and randmization circuit 2103 have the same configuration as the randmization sections described in Embodiment 1 through Embodiment 4 above. After data has been randomized by randmization circuit 2102, the data is further randomized by randmization circuit 2103.

Thus, according to a transmitting apparatus and transmission method of Embodiment 5, in addition to provision of the effects of Embodiment 1 above, data can be randomized with greater reliability since randomization is performed twice.

The number of randmization circuits 2102 and 2103 is not limited to two, and any number of randmization circuits can be used. However, when randomization is performed using an XOR operational circuit, if randomizing is performed twice using the same signal sequence, the original data will be restored, so randomizing must be performed using different signal sequences. Also, randmization section 2101 in this embodiment may be replaced by randmization section 1002 in FIG.11, and the randomization nullification section may be replaced by randomization nullification section 1101 in FIG.12.

In above-described Embodiment 1 through Embodiment 5, the description has related to the finding of reference points on the I-Q plane for 16QAM, but the present invention is also applicable to cases other than 16QAM, such as 64QAM. Also, in above-described Embodiment 1 through Embodiment 5, the number of 0s and number of 1s in data after randomization have been assumed to be the same, but a similar result can be obtained if the number of 0s and number of 1s are not the same, but nearly the same. Furthermore, the arrangement of 0s and 1s in data prior to randomization is not limited to the arrangements in above-described Embodiment 1 through Embodiment 5, but is arbitrary, and therefore the arrangement of 0s and 1s in data after randomization of data in that arrangement, also, need not be an arrangement in above-described Embodiment 1 through Embodiment 5. Also, in above-described Embodiment 1 through Embodiment 5, processing has been described for making the number of 0s and number of 1s approach so as to become the same by means of processing such as XORing or inversion, but the present invention is not limited to this, and anything is acceptable as long as there is circuitry for making the number of 0s and number of 1s equal, and the use of processing such as encryption is also acceptable as long as the number of 0s and number of 1s are made to approach so as to become equal. Moreover, while a case has here been described in which data conversion is performed prior to encoding, this is not a limitation, and it is sufficient for data conversion to be performed in a stage before modulation. Furthermore, if average power is measured in only one slot, data conversion may be performed for one slot only immediately before modulation.

As described above, according to the present invention it is possible to decode received data without errors by finding I-Q plane reference points with a high degree of accuracy by means of a simple circuit conf iguration .

This application is based on Japanese Patent Application No.2002-39358 filed on February 15, 2002, entire contents of which are expressly incorporated by reference herein.

### Industrial Applicability

The present invention is applicable to a transmitting apparatus and transmission method for transmitting M-ary modulated data.

## Claims

1. A transmitting apparatus comprising:
a data conversion section that converts arbitrary 0s and 1s of data for which I-Q plane reference points are to be found so that a number of 0s and a number of 1s are substantially identical; and
a transmitting section that transmits data converted by said data conversion section.

2. The transmitting apparatus according to claim 1, wherein said data conversion section comprises:
a signal sequence supply section that supplies a signal sequence in which a number of 0s and a number of 1s are identical; and
an operational section that XORs a signal sequence supplied from said signal sequence supply section with transmit data and makes a number of 0s and a number of 1s substantially identical.

3. The transmitting apparatus according to claim 1, wherein said data conversion section comprises:
a serial/parallel conversion section that performs separation into a plurality of signal sequences;
an inversion section that switches 1s and 0s for a separated partial signal sequence; and
a parallel/serial conversion section that makes a plurality of said signal sequences into one signal sequence after a number of 0s and a number of 1s have become substantially identical in all signal sequences.

4. The transmitting apparatus according to claim 2, further comprising an interleaving section that rearranges a signal sequence supplied from said signal sequence supply section;
wherein a signal sequence rearranged by said interleaving section is output to said operational section.

5. The transmitting apparatus according to claim 4, wherein said interleaving section uses an algorithm identical to an algorithm used in interleaving processing that rearranges transmit data on a bit-by-bit basis.

6. The transmitting apparatus according to claim 2, wherein said signal sequence supply section supplies a signal sequence in which 0s and 1s are arranged divided to left and right.

7. A base station apparatus provided with a transmitting apparatus comprising:
a data conversion section that converts arbitrary 0s and 1s of data for which I-Q plane reference points are to be found so that a number of 0s and a number of 1s are substantially identical; and
a transmitting section that transmits data converted by said data conversion section.

8. A mobile station apparatus provided with a transmitting apparatus comprising:
a data conversion section that converts arbitrary 0s and 1s of data for which I-Q plane reference points are to be found so that a number of 0s and a number of 1s are substantially identical; and
a transmitting section that transmits data converted by said data conversion section.

9. A transmission method comprising:
a data conversion step of converting arbitrary 0s and 1s of data for which I-Q plane reference points are to be found so that a number of 0s and a number of 1s are substantially identical; and
a transmitting step of transmitting data converted in said data conversion step.

10. The transmission method according to claim 9, wherein said data conversion step comprises:
a signal sequence supply step of supplying a signal sequence in which a number of 0s and a number of 1s are identical; and
an operational step of XORing a supplied signal sequence with transmit data and making a number of 0s and a number of 1s substantially identical.

11. The transmission method according to claim 9, wherein said data conversion step comprises:
a serial/parallel conversion step of performing separation into a plurality of signal sequences;
an inversion step of switching 1s and 0s for a separated partial signal sequence; and
a parallel/serial conversion step of making a plurality of said signal sequences into one signal sequence after a number of 0s and a number of 1s have become substantially identical in all signal sequences.
